# EUROPÄISCHE PATENTSCHRIFT

(11) **EP 1 569 829 B1**
(45) Veröffentlichungstag und Bekanntmachung des Hinweises auf die Patenterteilung: **26.09.2007**
(21) Anmeldenummer: 03780139.6
(22) Anmeldetag: 09.12.2003
(51) Int. Cl.: B60S 1/24, F16C 11/06

(54) **KUGELBOLZEN UND KUGELGELENK MIT EINEM SOLCHEN KUGELBOLZEN**
BALL PIN AND BALL JOINT COMPRISING ONE SUCH BALL PIN
BOULON A ROTULE ET JOINT A ROTULE MUNI D'UN TEL BOULON A ROTULE

(30) Priorität: 09.12.2002 DE 10257592
(43) Veröffentlichungstag der Anmeldung: 07.09.2005
(73) Patentinhaber: VALEO SYSTEMES D'ESSUYAGE, 78321 La Verrière (FR)
(72) Erfinder: EGNER-WALTER, Bruno, 74076 Heilbronn (DE); EDELE, Reinhard, 74321 Bietigheim-Bissingen (DE)
(74) Vertreter: Jahn, Wolf-Diethart
(86) Internationale Anmeldenummer: PCT/EP2003/013909
(87) Internationale Veröffentlichungsnummer: WO 2004/052700

(56) Entgegenhaltungen:
- DE-A- 19 647 024
- US-A- 4 695 180
- US-A- 5 284 397
- PATENT ABSTRACTS OF JAPAN vol. 007, no. 089 (M-207), 13. April 1983 (1983-04-13) -& JP 58 013218 A (MITSUBA DENKI SEISAKUSHO:KK), 25. Januar 1983 (1983-01-25)

## Beschreibung

Die Erfindung betrifft einen Kugelbolzen mit einer Kugel und einem mit der Kugel verbundenen Bolzen. Die Erfindung betrifft ferner ein Kugelgelenk mit einem solchen Kugelbolzen sowie eine Baugruppe bestehend aus zwei solchen Kugelgelenken.

Kugelgelenke werden in vielen Bereichen eingesetzt. Die vorliegende Anmeldung bezieht sich insbesondere auf die Kugelgelenke, die im Antriebsmechanismus für Scheibenwischer von Kraftfahrzeugen verwendet werden. Aus der US-A-5 284 397 ist eine Gelenkvorrichtung bekannt, bei der ein Kugelbolzen, der eine Kugel und einen Befestigungszapfen aufweist, mit dem Befestigungszapfen an einem Kurbelhebel befestigt ist. An der vom Befestigungszapfen abgewandten Seite ist die Kugel mit einer Ausnehmung versehen, in welche ein an der Innenseite der zum Gelenk gehörenden Kugelpfanne vorgesehener Vorsprung mit seitlichem Spiel für eine definierte Kippbegrenzung der Gelenkteile eingreift. Der Gelenkbolzen selbst ist nicht geeignet, in flexibler Weise für eine Vielzahl von Anwendungsfällen eingesetzt zu werden. Abgesehen von den üblichen Anforderungen hinsichtlich Spielfreiheit und Lebensdauer müssen Kugelgelenke bei Scheibenwischerantrieben eine Besonderheit erfüllen: Es wird oft gewünscht, über Doppelkugelgelenke zu verfügen, also über Kugelgelenke, die zwei nebeneinanderliegende Kugeln aufweisen. Ein Beispiel für ein solches Doppelkugelgelenk findet sich in der deutschen Offenlegungsschrift 44 00 296, bei der vorgesehen ist, auf eine erste Kugel eine zweite Kugel aufzukleben oder aufzuschweißen. In der deutschen Offenlegungsschrift 195 19 867 ist dagegen vorgesehen, ein einziges Kunststoffteil zu verwenden, das auf seiner Außenfläche mit zwei kugeligen Flächen versehen ist und auf einen Schaft aus Metall aufgesetzt wird.

Der Nachteil der bekannten Kugelgelenke besteht darin, daß ein sehr hoher Aufwand notwendig ist, um ein Doppelkugelgelenk zu erhalten.

Die Aufgabe der Erfindung besteht somit darin, einen Kugelbolzen sowie ein Kugelgelenk zu schaffen, die in flexibler Weise und mit geringem Aufwand in einer Vielzahl von Anwendungsfällen eingesetzt werden können.

Erfindungsgemäß ist zu diesem Zweck ein Kugelbolzen mit einer Kugel und einem mit der Kugel verbundenen Bolzen vorgesehen, wobei die Kugel auf ihrer vom Bolzen abgewandten Seite mit einer Aufnahme versehen ist, deren Durchmesser etwa dem Durchmesser des Bolzens entspricht. Der Bolzen ist mit einer Rändelung versehen ist, so dass er spielfrei in die Aufnahme eines zweiten Kugelbolzens einpressbar ist.

Dies ermöglicht, zwei Kugelbolzen miteinander zu kombinieren, wobei der Bolzen des einen Kugelbolzens in die Aufnahme des anderen Kugelbolzens eingesetzt wird. Es wird also mit geringem Aufwand ein Doppelkugelgelenk erhalten. Bei geeigneter Dimensionierung ergibt sich eine Presspassung, die zum Verbinden der beiden Kugelbolzen ausreichend ist.

Ein weiterer Vorteil der in der Kugel vorgesehenen Aufnahme besteht darin, daß der Kugelbolzen ein geringeres Gewicht hat.

Erfindungsgemäß ist auch ein Kugelgelenk mit einem Kugelbolzen mit Aufnahme vorgesehen, dadurch gekennzeichnet, daß die Kugelschale in ein Anschlußteil eingespritzt ist, beispielsweise eine Stange des Antriebsmechanismus des Scheibenwischers. Auf diese Weise ergibt sich eine maximale Einsparung an Montageschritten.

Gemäß einer bevorzugten Ausführungsform der Erfindung ist eine Kugelschale aus Kunststoff vorgesehen, die auf die Kugel aufgespritzt ist. Auf diese Weise läßt sich die Kugelschale ohne Spiel auf der Kugel anbringen. Da die Kugelschale nicht auf die Kugel aufgeschoben werden muß, ergeben sich zwei weitere Vorteile: Zum einen kann die Kugelschale die Kugel weiter umschließen, so daß sich ein höherer Traganteil ergibt. Dies ermöglicht es, Kugeln mit einem kleineren Durchmesser zu verwenden. Zum anderen kann auf die sonst üblichen Balgabdichtungen verzichtet werden, da die Kugelschale an der Kugel mit einem geschlossenen, umlaufenden Rand anliegt und somit vollständig abdichtet. Der Eintritt von Schmutzpartikeln ist auf diese Weise verhindert. Wenn für die Kugelschale ein geeignetes Material gewählt wird, beispielsweise POM mit einem Gleitmittelzusatz, kann auf eine Befettung verzichtet werden.

Um erhöhten Dichtigkeitsanforderungen zu entsprechen, kann eine Dichtung vorgesehen sein, die an der Kugelschale angreift, beispielsweise in einer Nut.

Gemäß einer bevorzugten Ausführungsform der Erfindung weist die Dichtung einen Verankerungsabschnitt auf, der in der Aufnahme angeordnet ist, sowie einen kreis- oder ringförmigen Dichtungsabschnitt, der an der Kugelschale anliegt. Da der Verankerungsabschnitt tief in die Aufnahme im Kugelbolzen eingesetzt werden kann, wird die Dichtung zuverlässig am Kugelbolzen gehalten.

Gemäß einer bevorzugten Ausführungsform der Erfindung ist ein Anschlag vorgesehen, der in die Aufnahme eingreift und die maximal mögliche Bewegung der Kugelschale relativ zur Kugel begrenzt. Auf diese Weise ergibt sich ein sehr kompakter Anschlag, der gleichzeitig hohen Belastungen widerstehen kann. Vorzugsweise ist der Anschlag einstückig mit der Kugelschale ausgeführt.

Die Erfindung wird nachfolgend anhand verschiedener Ausführungsformen beschrieben, die in den beigefügten Zeichnungen dargestellt sind. In diesen zeigen:
- Figur 1 in einer Schnittansicht ein Kugelgelenk gemäß einer ersten Ausführungsform;
- Figur 2 in einer Schnittansicht ein Kugelgelenk gemäß einer zweiten Ausführungsform;
- Figur 3 eine erste Baugruppe bestehend aus zwei Kugelgelenken;
- Figur 4 eine zweite Baugruppe bestehend aus zwei Kugelgelenken; und
- Figur 5 eine dritte Baugruppe bestehend aus zwei Kugelgelenken.

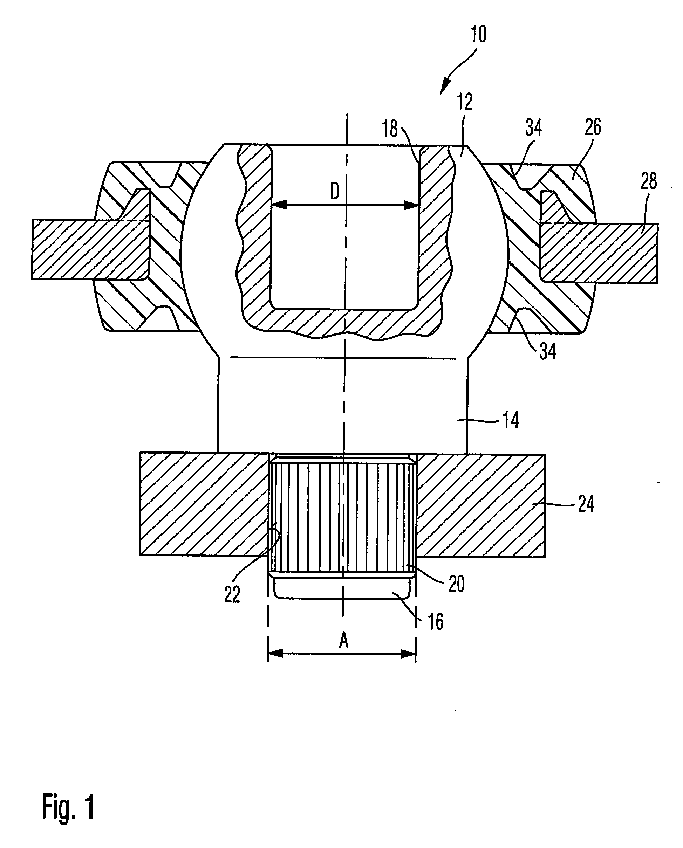

In Figur 1 ist ein Kugelbolzen 10 gezeigt, der aus einer Kugel 12, einem Zwischenabschnitt 14 und einem Bolzen 16 besteht. Die Kugel 12, der Zwischenabschnitt 14 und der Bolzen 16 sind einstückig aus Metall ausgebildet.

Die Kugel 12 weist auf ihrer vom Bolzen 16 abgewandten Seite eine Aufnahme 18 auf, die als Blindbohrung ausgeführt ist. Die Tiefe der Aufnahme 18 entspricht etwa ¾ der Höhe der Kugel 12. Der Innendurchmesser D der Aufnahme 18 entspricht etwa dem Außendurchmesser A des Bolzens 16. Dieser ist hier mit einer Rändelung 20 versehen, mittels der er spielfrei in eine Bohrung 22 in einem Basisteil 24 eingepreßt ist.

Auf der Kugel 12 ist eine Kugelschale 26 angeordnet, die ein Spritzgußteil aus POM ist. Die Kugelschale 26 ist direkt auf die Kugel 12 aufgespritzt und gleichzeitig in eine Aussparung einer Stange 28 eingespritzt. Die Stange 28 ist Teil des Antriebsmechanismus für einen Scheibenwischer. Da die Kugelschale 26 auf die Kugel 12 des Kugelbolzens 10 aufgespritzt ist, liegt sie spielfrei an der Kugel an.

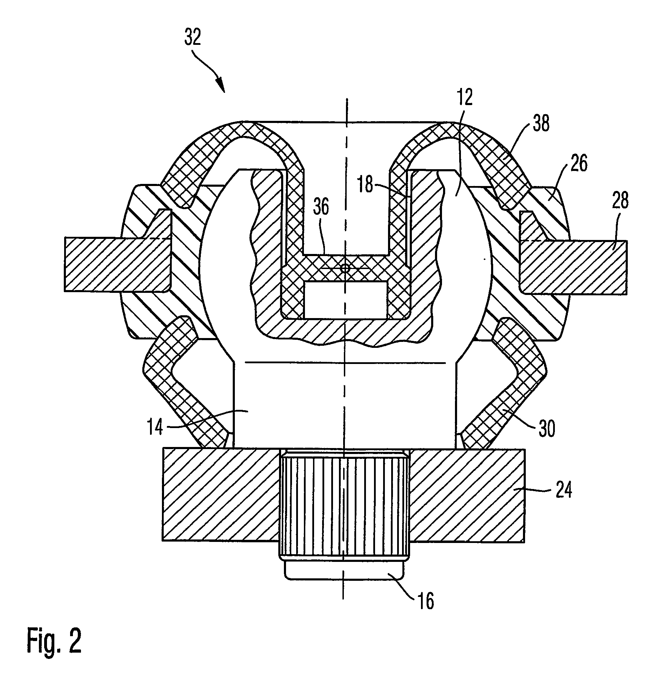

In Figur 2 ist ein Kugelgelenk gezeigt, wie es grundsätzlich aus Figur 1 bekannt ist. Der Unterschied zur Ausführungsform von Figur 1 besteht darin, daß zwei Dichtungen 30, 32 vorgesehen sind. Die Dichtung 30 ist als ringförmiger Balg ausgebildet, der sich mit seinem bezüglich Figur 2 oberen Rand in einer Nut 34 (siehe Figur 1) in der Kugelschale 26 und mit seinem bezüglich Figur 2 unteren Rand am Basisteil 24 abstützt. Die Dichtung 32 weist einen Verankerungsabschnitt 36 auf, der in die Aufnahme 18 der Kugel 12 eingesetzt ist, sowie einen einstückig mit dem Verankerungsabschnitt ausgebildeten Dichtungsabschnitt 38, der in eine zweite Nut 34 der Kugelschale 26 eingreift. Das Kugelgelenk ist somit rundum abgedichtet.

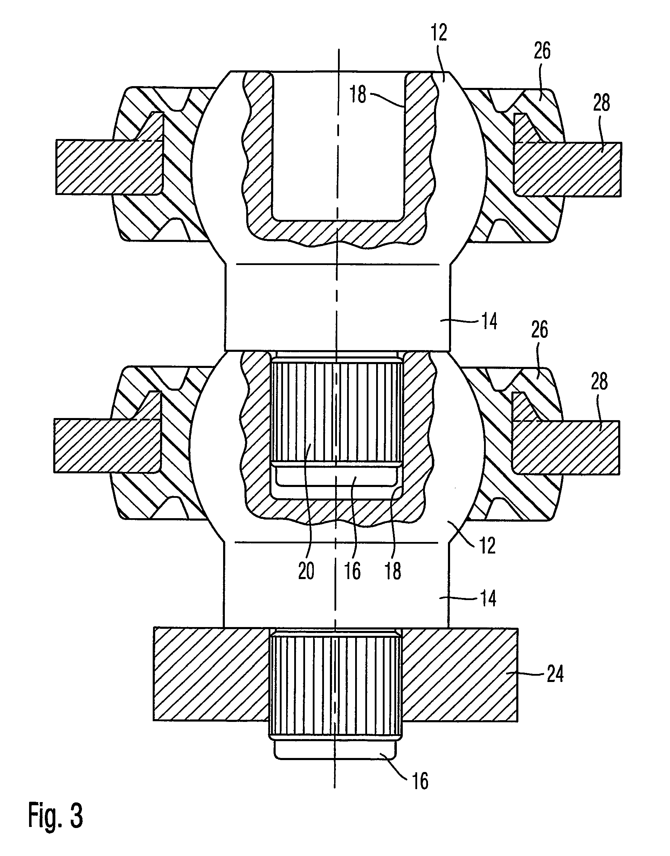

In Figur 3 ist eine Baugruppe gezeigt, die aus zwei Kugelgelenken 10 besteht, wie sie aus Figur 1 bekannt sind. Das in Figur 3 obere Kugelgelenk ist am unteren Kugelgelenk dadurch befestigt, daß der Zapfen 16 des oberen Kugelgelenks in die Aufnahme 18 des unteren Kugelgelenks eingeschoben ist. Da die Rändelung 20 des Bolzens 16 einen geringfügig größeren Durchmesser hat als die Aufnahme 18, ergibt sich eine Preßpassung, durch die der Bolzen 16 spielfrei in der Aufnahme 18 aufgenommen ist.

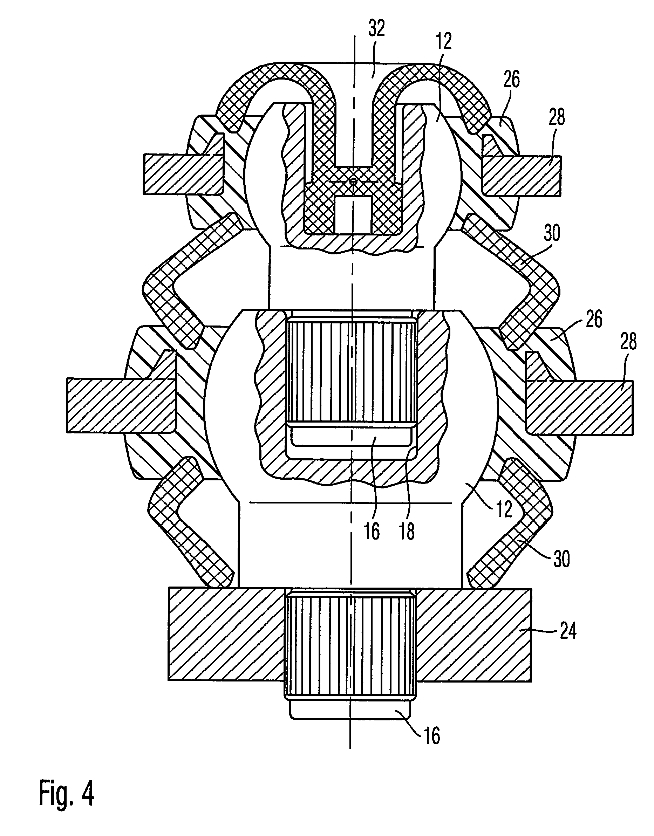

In Figur 4 ist eine Baugruppe gezeigt, die durch Kombination von zwei Kugelgelenken gemäß Figur 2 erhalten ist. Ein wesentliches Merkmal der in Figur 4 gezeigten Baugruppe besteht darin, daß hier zwei Kugelgelenke unterschiedlichen Durchmessers miteinander kombiniert sind. Das bezüglich Figur 4 obere Kugelgelenk weist nämlich einen geringeren Kugeldurchmesser auf als das untere Kugelgelenk. Diese Kugelgelenke sind jedoch unabhängig von ihrem Kugeldurchmesser miteinander kombinierbar, da sowohl der Durchmesser ihrer Bolzen 16 als auch der Durchmesser ihrer Aufnahmen 18 jeweils identisch ist (mit Ausnahme eines eventuellen Übermaßes des Bolzens, um eine Preßpassung zu erzielen). Auf diese Weise ergibt sich bei minimalem Montageaufwand eine Vielzahl von Kombinationsmöglichkeiten.

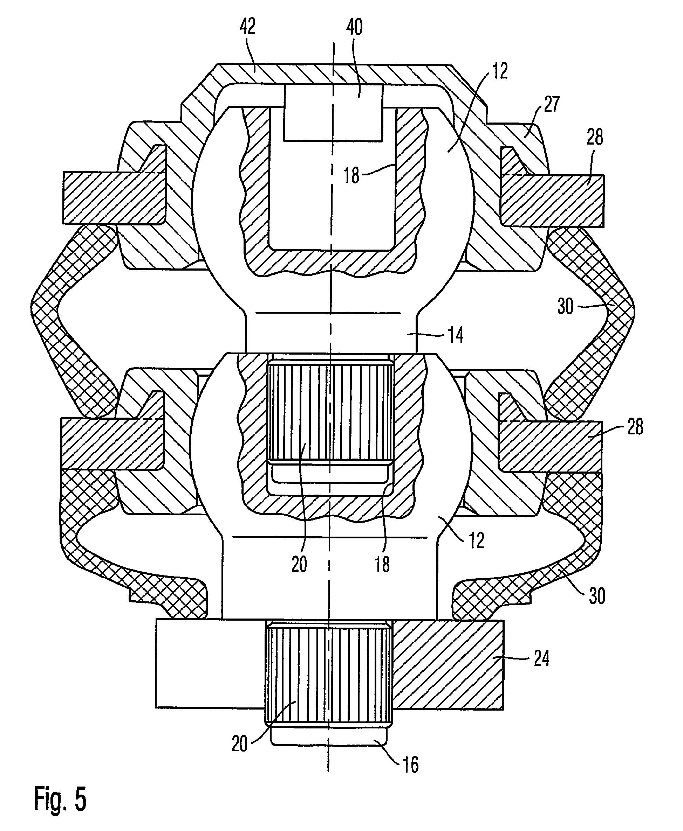

In Figur 5 ist eine Baugruppe bestehend aus zwei Kugelgelenken gezeigt. Im Unterschied zu den in den Figuren 1 bis 4 gezeigten Kugelgelenken werden bei der Baugruppe gemäß Figur 5 Kugelschalen 27 verwendet, die auf die Kugeln 12 der Kugelbolzen 10 aufgeschnappt werden. Ein weiterer Unterschied besteht hinsichtlich der Anordnung der Dichtungen 30, 32: Diese greifen nicht in eine Nut der entsprechenden Kugelschale ein, sondern stützen sich zwischen den Stangen 28 bzw. zwischen der Stange 28 und dem Basisteil 24 ab.

Ein weiterer wichtiger Unterschied zu den vorhergehenden Ausführungsformen besteht darin, daß die Kugelschale 27 des bezüglich Figur 5 oberen Kugelgelenks mit einem Anschlag 40 versehen ist, der als zylindrischer Vorsprung an einer einstückig mit der Lagerschale 27 ausgebildeten Brücke 42 ausgeführt ist und in die Aufnahme 18 der Kugel 12 des oberen Kugelgelenks eingreift. Auf diese Weise ist die maximale Verdrehung der Kugelschale 27 und damit der Stange 28 relativ zum oberen Kugelgelenk begrenzt. Gleichzeitig ist, da die Brücke 42 flächig geschlossen ist, keine Dichtung auf der Oberseite des oberen Kugelgelenks erforderlich.

### Bezugszeichenliste

- 10:: Kugelbolzen
- 12:: Kugel
- 14:: Zwischenabschnitt
- 16:: Bolzen
- 18:: Aufnahme
- 20:: Rändelung
- 22:: Bohrung
- 24:: Basisteil
- 26:: Kugelschale
- 28:: Stange
- 30:: Dichtung
- 32:: Dichtung
- 34:: Nut
- 36:: Verankerungsabschnitt
- 38:: Dichtungsabschnitt
- 40:: Anschlag
- 42:: Brücke

## Patentansprüche

1. Kugelbolzen mit einer Kugel (12) und einem mit der Kugel verbundenen Bolzen (16), wobei die Kugel auf ihrer vom Bolzen abgewandten Seite mit einer Aufnahme (18) versehen ist, **dadurch gekennzeichnet, dass** der Durchmesser der Aufnahme (18) etwa dem Durchmesser des Bolzens (16) entspricht und dass der Bolzen (16) mit einer Rändelung (20) versehen ist, so dass er spielfrei in die Aufnahme (18) eines zweiten Kugelbolzens einpressbar ist.

2. Kugelgelenk mit einem Kugelbolzen nach einem der vorhergehenden Ansprüche, **dadurch gekennzeichnet, dass** eine Kugelschale (26, 27) aus Kunststoff vorgesehen ist, die in ein Anschlußteil (28) eingespritzt ist.

3. Kugelgelenk nach Anspruch 2, **dadurch gekennzeichnet, dass** die Kugelschale (26) auf die Kugel (12) aufgespritzt ist.

4. Kugelgelenk nach einem der Ansprüche 2 und 3, **dadurch gekennzeichnet, dass** eine Dichtung (30, 32) vorgesehen ist, die an der Kugelschale (26) angreift.

5. Kugelgelenk nach Anspruch 4, **dadurch gekennzeichnet, dass** die Kugelschale (26) eine Nut (34) aufweist, in der die Dichtung angeordnet ist.

6. Kugelgelenk nach einem der Ansprüche 4 und 5, **dadurch gekennzeichnet, dass** die Dichtung (32) einen Verankerungsabschnitt (36) aufweist, der in der Aufnahme (18) angeordnet ist, und einen kreis- oder ringförmigen Dichtungsabschnitt (38), der an der Kugelschale (26) anliegt.

7. Kugelgelenk nach einem der Ansprüche 2 bis 6, **dadurch gekennzeichnet, dass** ein Anschlag (40) vorgesehen ist, der in die Aufnahme (18) eingreift und die maximal mögliche Bewegung der Kugelschale (27) relativ zur Kugel begrenzt.

8. Kugelgelenk nach Anspruch 7, **dadurch gekennzeichnet, dass** der Anschlag (40) einstückig mit der Kugelschale (27) ausgeführt ist.

9. Baugruppe bestehend aus zwei Kugelgelenken nach einem der Ansprüche 2 bis 8, **dadurch gekennzeichnet, dass** der Bolzen (16) des Kugelbolzens des einen Kugelgelenks (10) in der Aufnahme (18) der Kugel (12) des zweiten Kugelbolzens angebracht ist.

## Claims

1. Ball pin comprising a ball (12) and a pin (16) connected to the ball, **characterized in that** the ball is provided with a recess (18) on its side facing away from the pin, **characterised in that** the diameter of said recess (18) corresponds approximately to the diameter of the pin (16) and that the pin (16) is provided with knurling (20) so that it can be pressed into the recess (18) of a second ball pin without any play.

2. Ball joint comprising a ball pin according to one of the preceding claims, **characterized in that** there is a ball cup (26, 27) made of plastic which is injected into a connecting part (28).

3. Ball joint according to claim 2, **characterized in that** the ball cup (26) is injected on the ball (12).

4. Ball joint according to one of claims 2 and 3, **characterized in that** a seal (30, 32) is provided which engages on the ball cup (26).

5. Ball joint according to claim 4, **characterized in that** the ball cup (26) has a groove (34) in which the seal is arranged.

6. Ball joint according to either of Claims 4 and 5, **characterized in that** the seal (32) has an anchoring section (36) which is arranged in the recess (18) and a circular or annular sealing section (38) which bears against the ball cup (26).

7. Ball joint according to one of claims 2 to 6, **characterized in that** there is a stop (40) which engages in the recess (18) and defines the maximum possible movement of the ball cup (27) relative to the ball.

8. Ball joint according to Claim 7, **characterized in that** the stop (40) is made in one piece with the ball cup (27).

9. Assembly consisting of two ball joints according to one of Claims 5 to 8, **characterized in that** the pin (16) of the ball pin of one ball joint (10) is fitted in the recess (18) of the ball (12) of the second ball pin

## Revendications

1. Pivot de rotule, comportant une rotule (12) et un pivot (16) assemblé à la rotule, la rotule, sur son côté opposé au pivot, étant munie d'un logement (18), **caractérisé en ce que** le diamètre du logement (18) correspond sensiblement au diamètre du pivot (16), et **en ce que** le pivot (16) comporte un moletage (20), de telle sorte qu'il peut être inséré sans jeu dans le logement (18) d'un deuxième pivot de rotule.

2. Articulation à rotule comportant un pivot de rotule selon l'une des revendications précédentes, **caractérisée en ce qu'**il est prévu un coussinet (26, 27) en matière plastique, qui est moulé par injection dans une partie de raccordement (28).

3. Articulation à rotule selon la revendication 2, **caractérisée en ce que** le coussinet (26) est moulé par injection sur la rotule (12).

4. Articulation à rotule selon les revendications 2 et 3, **caractérisée en ce qu'**il est prévu une garniture d'étanchéité (30, 32), qui entre en prise avec le coussinet (26).

5. Articulation à rotule selon la revendication 4, **caractérisée en ce que** le coussinet (26) comporte une rainure (34) dans laquelle est posée la garniture d'étanchéité.

6. Articulation à rotule selon les revendications 4 et 5, **caractérisée en ce que** la garniture d'étanchéité (32) comporte une partie d'ancrage (36) qui est agencée dans le logement (18), et une partie d'étanchéité (38) circulaire ou annulaire, qui est en appui contre le coussinet (26).

7. Articulation à rotule selon l'une quelconque des revendications 2 à 6, **caractérisée en ce qu'**il est prévu une butée (40) qui s'engage dans le logement (18) et qui limite le mouvement maximal possible du coussinet (27) par rapport à la rotule.

8. Articulation à rotule selon la revendication 7, **caractérisée en ce que** la butée (40) est formée d'un seul tenant avec le coussinet (27).

9. Groupe formé par deux articulations à rotule selon l'une quelconque des revendications 2 à 8, **caractérisé en ce que** le pivot (16) du pivot de rotule de l'une des articulations à rotule (10) est logé dans le logement (18) de la rotule (12) du deuxième pivot de rotule.
